# EUROPEAN PATENT APPLICATION

(11) **EP 1 603 211 A1**
(43) Date of publication of application: **07.12.2005**
(21) Application number: 05011450.3
(22) Date of filing: 27.05.2005
(51) Int. Cl.: H02H 5/10, H02H 7/26, G01R 31/02

(54) **Detection and disconnection device for broken covered conductor in medium voltage electrical network**

(30) Priority: 01.06.2004 SI 200400155
(71) Applicant: Bezjak, Marjan, 2000 Maribor (SI)
(72) Inventor: Bezjak, Marjan, 2000 Maribor (SI); Toros, Zvonko, 5212 Dobrova v Brdih (SI); Bombek, Zmago, 2111 Maribor (SI)
(74) Representative: Vonnemann, Gerhard

(57) **Abstract**

The detection and disconnection device for a broken covered conductor in medium voltage network solves the problem of quick and simple disconnection of a damaged covered conductor (4) from voltage in a medium voltage line (1) as well as enables a quick transfer of information about the damage to the competent control centre. For this purpose, the device according to this invention consists of an indication unit (2) at the end of the covered conductors (4) and a disconnection unit (3) at the beginning of covered conductors (4).

The operation of the device is based on the indication unit (2) sending information (B) about disconnected covered conductor (4) at point (C) to the disconnection unit (3) which via switch (7) disconnects the voltage of the conductor (4). In this way, the conductor (4) broken at point (C) no longer represents a life threat for people and other living beings.

## Description

The subject of this invention is a detection and disconnection device for a broken covered conductor in a medium voltage electrical network. To be more precise this is a protection device, which disconnects a broken covered conductor lying on the ground from electrical power. Therefore such electrical line is safe for people and other living beings around this area.

According to the international patent classification this invention belongs to class H01H 83/14 and additionally to class H01H 83/12.

The technical problem being solved by the invention is such a device construction that will enable a fast, efficient and safe disconnection of a broken electrical line from electrical power source, fast and user-friendly detection and localization of the broken part of the line, and together with other equipment in the electrical network the total reconstruction of electrical power supply; the device could be used on existing and new electrical lines.

The author of the invention is not familiar of any similar solution of the technical problem, which could be described as a known state of the art...

The problem which still remained unsolved is, above all, a fast detection of a broken electrical medium voltage line, its immediate and reliable disconnection from electrical power source, as well as a simple and precise localization of the broken conductor line.

According to the invention, the problem is solved with a detection and disconnection device for a broken covered conductor in a medium voltage electrical network. The device is constructed of an indication unit and a disconnection unit. The disconnection unit is positioned in front of the indication unit looking in the direction of power supply. The information signal between the two units can be transmitted through wired or wireless carriers. Because of different options of power supply, we have also several different variations of the device. The invention will be more precisely described on the basis of the feasibility examples and figures as follows:
- Fig. 1:: the device mounted on medium voltage power line
- Fig. 2:: the device with a motor gear switch and autonomous power supply, first feasible example
- Fig. 3:: the voltage transformer charged device, second feasible example
- Fig. 4:: the solar charged device, third feasible example
- Fig. 5:: the transformer station charged device, fourth feasible example

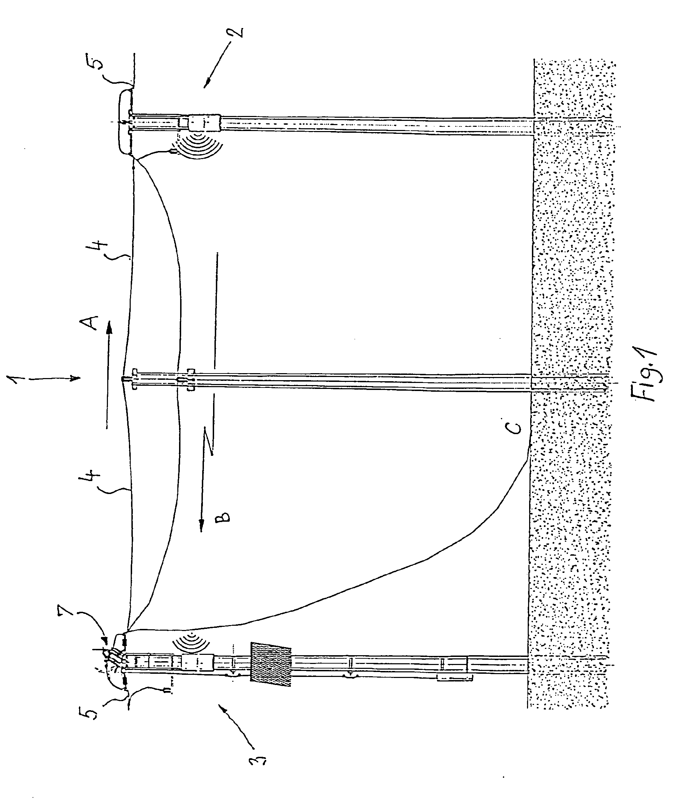

In Fig. 1, we have the detection and disconnection device for a broken covered conductor in a medium voltage electrical network 1, consisting of the indication unit (2) and the disconnection unit (3), which are as a rule separately mounted on the appertain poles (6). A disconnection device (3) is usually mounted on a pole (6) at the beginning of covered conductors (4), whereas the indication unit (2) is mounted at the end of covered conductors (4), as shown in Fig. 1. In front of the disconnection unit (3) and behind the indication unit (2) we have bar conductors (5) or some other suitable conductors. This applies if the electrical line (1) is charged in the direction A, meaning that the units (2) and (3) are placed on both ends of covered conductors (4), in front of and behind bare conductors (5) and in the above-mentioned order. As a rule, there are three bare conductors (5) and the same number of covered conductors (4) in direction A.
If the covered conductor (4) is broken between the indication unit (2) and the disconnection unit (3), the indication unit (2) senses the voltage drop in one of the phases and sends information through wired or wireless carriers to the disconnection unit (3) in direction B. The disconnection unit (3) disconnects the line immediately from power source through a covered conductor (4) and therefore the covered conductor lying on the ground C is no longer a life threat. If the disconnection does not take place, the broken covered conductor (4) lying on the ground is hazardous to all life around. The disconnection unit (3) disconnects the covered conductor (4) line only if the detection unit (2) senses voltage drop or complete outage of voltage in one or more phases. If voltage conditions on both ends of covered conductor (4) are conserved or if they are changed in the same way in the electrical line (1), the disconnection unit (3) does not disconnect the line. In this case unnecessary disconnections of electrical lines (1) have been eliminated. The indication unit (2) can be programmed in such a way that it can send the same information to the disconnection unit (3) and to the centre responsible for maintenance of electrical lines. In this case the maintenance centre can easily and very quickly fix or change the broken covered conductor (4).

Unprofessional mounting, atmospheric discharge or mechanical damage in critical places are usually the causes for broken or thorn covered conductors (4).
In the same way as mentioned above, the device can be used in the case where a medium voltage line (1) is made of covered conductors (4) only. In the case where we have bare conductors (5) only, we cannot use this device; this applies to all feasible examples, described in continuation.

The variation of the device according to the invention or the variation of the indication unit (2) and disconnection unit (3) is determined by the power supply and several different feasible examples are possible.

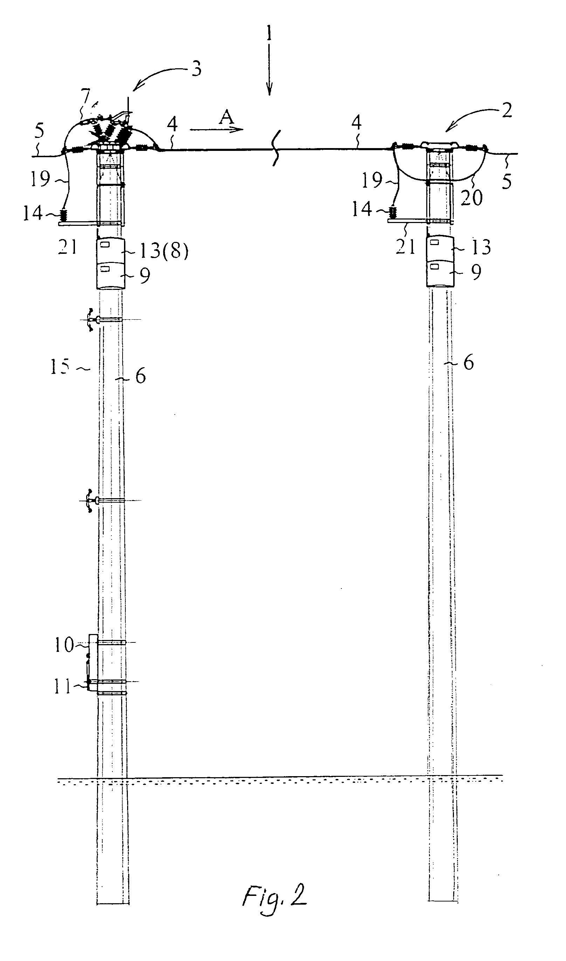

In Fig. 2 there is the first feasible example. In this example the indication unit (2) is mounted on pole (6), between both ends of covered conductors (4) and the beginnings of bare conductors (5). The number of conductors 4 and 5 is optional. The indication unit (2) consists of a voltage indicator (9) with a transmitter (13), which are mounted on a pole (6) and of voltage transformer (14),which is mounted on a bracket (21), and with an electrical conductor (19) joined with corresponding covered conductors (4). Every covered conductor (4) must have at least one voltage transformer (14). Covered conductors (4) are connected with corresponding bare conductors (5) through bridging bindings (20). The voltage indicator (9) is charged directly from Lithium batteries, which are in the same housing as the voltage indicators 9. Instead of a voltage transformer (14), we can use a capacitive insulator (12).

On one of the poles (6) the disconnection device (3) is mounted at the end of bare conductors (5) and at the beginning of covered conductors (4). The disconnection unit (3), consisting of voltage indicator (9), signal receiver (8), AC/DC charger (10), accumulator batteries (11), voltage transformer (14) mounted on a bracket (21) and through the electrical conductor (19) joined with covered conductors (4) and a motor gear switch (7), that is mounted on the top of the pole (6). The charger (10) is connected with the switch (7) by means of a cable 22. The signal receiver (8) of the voltage indicator (9) is constructed in a such way that it can receive wireless signals (GSM, radio wave, optical fiber) or wired signals depending on the variation of the transmitter (13) of the indication unit (2). The disconnection unit (3) can be charged from many different power sources. In this example, we can also use a capacitive insulator (12) instead of voltage transformer (14).
In the above feasible example the device works as follows: In the case when one of the covered conductors (4) is broken and the voltage drops in this part of a medium voltage line (1), the voltage drop is registered by the voltage indicator (9) in the indication unit (2). This information is sent by the transmitter (13) in the direction B to the signal receiver (8) and then to the voltage indicator (9) of the disconnection unit (3). The disconnection unit (3), through the voltage transformer (14) or through capacitive insulator (12) and switch (7), disconnects voltage in the broken covered conductor (4). The signal receiver (8) can be used as a transmitter, too, and can inform the control centre about the broken voltage line (1).

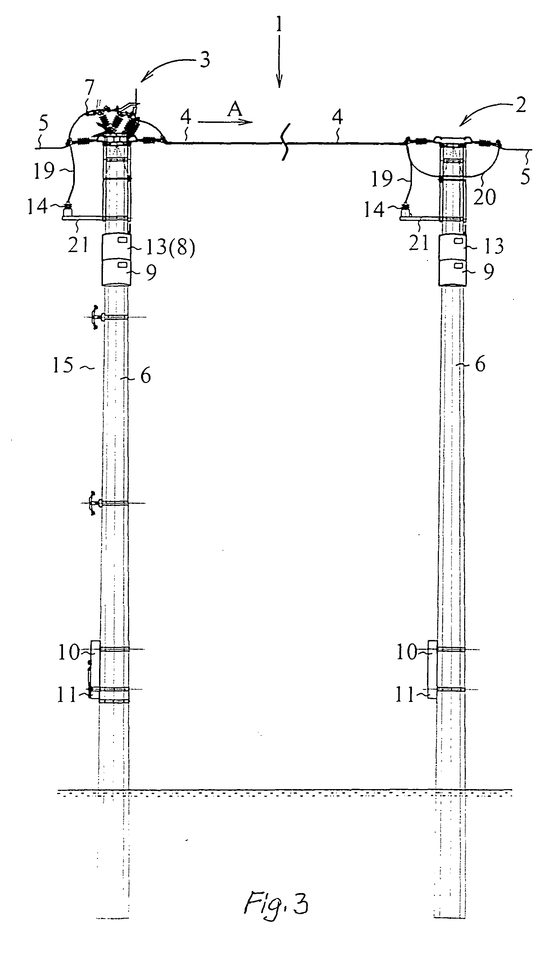

In Fig. 3, there is the second feasible example in which the indication unit (2) consists of a voltage indicator (9) with a transmitter (13) and of an AC/DC charger (10) with an accumulator battery (11), both mounted on a pole (6). In addition to that there is a voltage transformer (14), which is mounted on a pole (6) with a bracket (21), joined with the electrical line (19) and a covered conductor (4). One or more transformers (14) can be used; they are joined with bare conductors 5 with bridge bindings (20). In some other example we can use a capacitive insulator (12) instead of voltage transformer (14).

The disconnection unit (3) is mounted on a pole (6) at the beginning of covered conductors (4). The disconnection unit 3 consists of a voltage indicator (9) with a receiver (8), an AC/DC charger (10) and an accumulator battery (11). The above-mentioned elements are connected with a cable (22) and the other end of the cable is connected to a switch (7). In addition to that one or more voltage transformers (14) are also required; they are mounted on a pole (6) with a bracket (21), joined with the electrical line (19) and bare conductors (5). Bare conductors (5) are joined, over a switch (7), with covered conductors (4). Also in this example we can use a capacitive insulator (12) instead of voltage transformer (14).

According to the second described feasible example, the device works as follows: The voltage indicator (9) of the indication unit (2) with help of the voltage transformer (14) senses voltage drop in the broken covered conductor (4). This information is sent by transmitter (13) in direction B to the signal receiver (8) with a voltage indicator (9) on the side of the disconnection unit (3). The voltage indicator (9) with a transmitter (13) in the indication unit (2) is charged with a charger (10) powered by an accumulator battery (11). In the disconnection unit (3) an AC/DC charger (10) with battery (11) charges the voltage indicator (9) with a receiver (8).

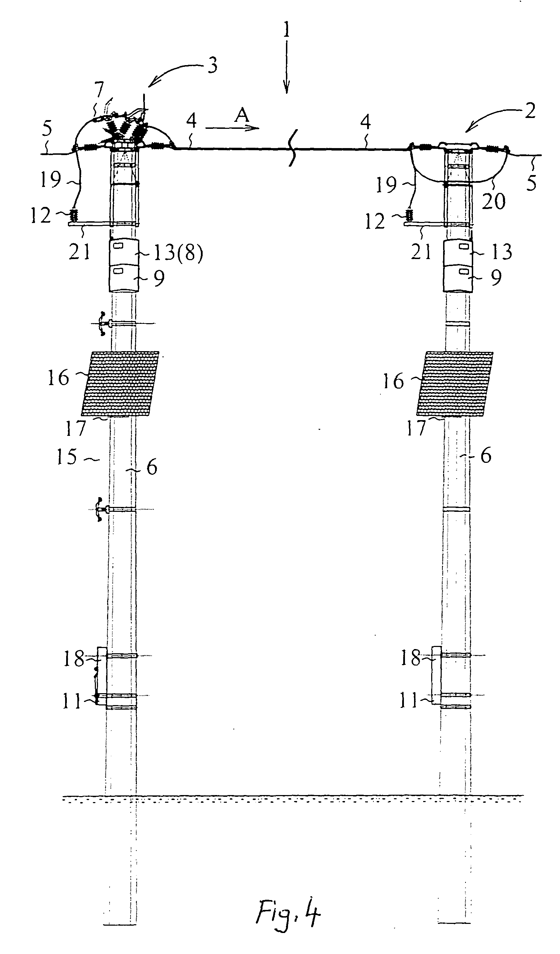

In Fig. 4, the third feasible example according to the invention is presented. In this example, the indication unit (2) consists of a voltage indicator (9) with transmitter (13), solar panel (16), DC/DC charger (18) with accumulator battery (11), and capacitive insulators (12). The solar panel (16) is mounted on a pole (6) with a bracket (17) and capacitive insulators (12) with the other bracket (21). All other stated elements are mounted on a pole (6) directly or indirectly. Capacitive insulators (12) are connected with covered conductors (4) through electrical lines (19). Bare conductors (5) are connected with capacitive insulators (12) with bridge bindings (20). The DC/DC charger (18) with an accumulator battery (11) is charged with a solar panel (16). In some other example we can use a voltage transformer (14) instead of capacitive insulator (12.

The disconnection unit (3) mounted on a pole (6) at the beginning of covered conductors (4) consists of voltage indicator (9) with transmitter (13), solar panel (16), DC/DC charger (18) with accumulator battery (11) and capacitive insulator (12). Capacitive insulator (12) is connected to the bare conductor (5) through the electrical line (19). Bare conductors (5) are joined with covered conductors (4) through a switch (7).DC/DC charger 18 with accumulator battery 11 charges the voltage indicator 9 with transmitter 13, for additional charging the solar panel 16 is used.. DC/DC charger (18), voltage indicator (9) and switch (7) are connected with a cable (22). Also in this example we can use a voltage transformer (14) instead of capacitive insulator (12.

In the third feasible example the device works as follows: In the indication unit (2), the voltage indicator 9 senses with a help of capacitive insulators (12) a voltage drop in the broken covered conductor (4). The transmitter (13) in the indication unit 2 sends information in direction B to the disconnection unit (3) or precisely to the signal receiver (8), which is simultaneously a transmitter 13 of the voltage indicator (9). The voltage indicator (9) disconnects the broken covered conductor (4) with help of capacitive insulators (12) with a motor gear switch (7).

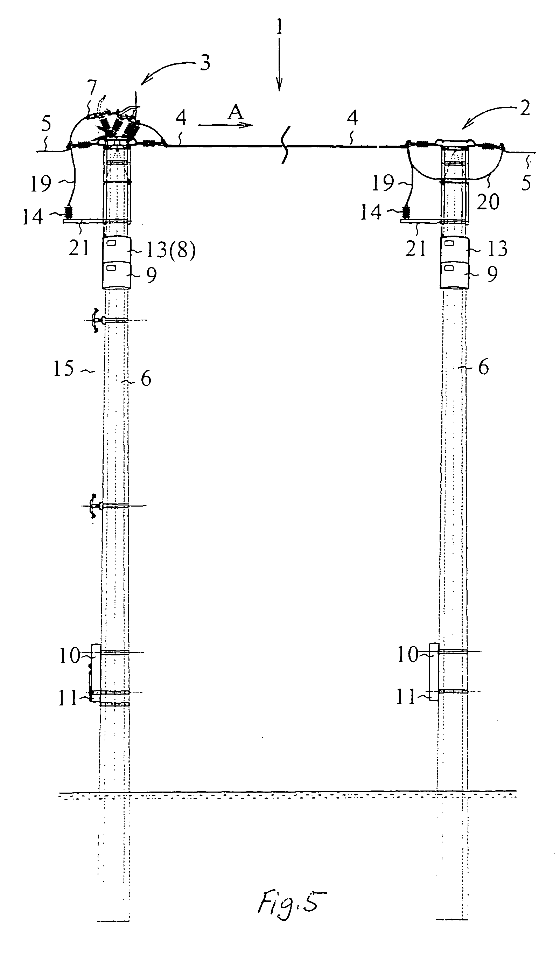

In Fig. 5, the fourth feasible example according to the invention is shown. In this example the indication unit (2) consists of an AC/DC charger (10) with an accumulator battery (11) and of a voltage indicator (9) with a transmitter (13). All of them are mounted on a pole (6), together with voltage transformer (14), which is mounted on a pole (6) with a bracket (21). The voltage transformer (14) is connected with a covered conductor (4) with the electrical line (19). Instead of voltage transformer (14) we can use a capacitive insulator (12).

The disconnection unit (3) comprises AC/DC charger (10) with accumulator battery (11), a voltage indicator (9) with a transmitter (13) all of them mounted on a pole (6), a voltage transformer (14), which is, over the electrical line 19, connected with the bar conductor 5. The switch (7) is mounted on the top of the pole (6). AC/DC charger (10) and voltage indicator (9) are connected with the switch (7) with a cable (22). Bare conductor (5) is joined with a covered conductor (4) over the motor gear switch (7). In this case we need in indication unit (2), as in all other above described feasible examples, at least one voltage transformer (14) and as many capacitive insulators (12), electrical lines (19) and bridge bindings (20) as there are covered conductors (4) and bare conductors (5) mounted on a pole (6). The same applies to the disconnection unit (3) with at least one voltage transformer (14) and of which the number of capacitive insulators (12), electrical lines (19), bridge bindings (20), poles of the switch (7) is the same as the number of covered conductors (4) and bare conductors (5) mounted on a pole (6).

The fifth feasible example according to the invention, which is not shown in the figures, has its roots in the solution, that both the indication unit (2) and the disconnection unit (3) are mounted in transformer stations instead on the poles (6). On condition that one of the transformer stations is at the beginning of a medium voltage line (1) and at the beginning of the covered conductors (4), respectively while the second transformer station is at the end of the electrical line (1) and at the end of covered conductors (4), respectively. In this case we can use the AC or DC power source from the transformer station.

As it is evident from previously descried feasible device examples according to the invention, the motor drive of the motor gear switch (7), in the executive point of the voltage line 1 and in the disconnection unit (3), is not specified. In some other feasible example the switch (7) can be equipped with disconnection spring, magnetic gear or some other gear, which are not shown in the figures. It is the rule that the signal receiver 8, placed on disconnection unit 3 side, must be telecommunicationally harmonized with the transmitter 13 on the side of indicator unit 2.

Totally autonomous working of the indication unit (2) and the disconnection unit (3) can be achieved with accumulator batteries (11), which can be charged with a solar panel (16), transformers or some other AC or DC power source. In some other feasible example, we can use Lithium battery or some other type of batteries, integrated in voltage indicator (9).

## Claims

1. The detection and disconnection device for a broken covered conductor in medium voltage electrical network, is **characterized by the fact in which** at the beginning of medium voltage line (1) and/or at the beginning of covered conductors (4) at least one disconnection unit (3) is mounted, whereas at the end of covered conductors (4) at least one indication unit (2) is mounted; in which the indication unit (2) consists of a voltage indicator (9) with a transmitter (13), an AC/DC charger (10) or DC/DC charger (18) and at least one capacitive insulator (12) or at least one voltage transformer (14); in which the disconnection unit (3) consists of voltage indicator (9) with signal receiver (8) and/or transmitter (13), AC/DC charger (10) or DC/DC charger (18), one or more voltage tran-sformers (14) or capacitive insulators (12) and at least one switch (7).

2. The device according to claim 1, is **characterized by the fact in which** the indication unit (2) and the disconnection unit (3) can be charged autonomously with batteries integrated in voltage indicators (9) and can be charged with other power supplies, such as accumulator batteries (11) with solar panels (16), voltage transformers (14), or directly from transformer station.

3. The device according to claim 1, is **characterized by the fact in which** the switch (7) can be equipped with separated or integrated drive of optional construction.

4. The device according to claim 1, is **characterized by the fact in which** the signal receiver (8) and transmitter (13) of the indication unit (2) and/or disconnection unit (3) can be of wired or wireless construction.

5. The device according to claim 1, is **characterized by the fact in which** the capacitive insulator (12) is installed in the indication unit (2) and/or in the disconnection unit (3) only if their component is a solar panel (16) or a battery or any other corresponding power source integrated in the voltage indicator (9) and in all other examples the voltage transformer (14) is built in.

6. The device according to claim 1, is **characterized by the fact in which** the capacitive insulator (12) and voltage transformer (14) are connected with the covered conductor (4) and/or bare conductors (5) through electrical lines (19).

7. The device according to claim 1, is **characterized by the fact in which** the indication unit (2) can be built in transformer station at the end of medium voltage line (1).

8. The device according to claim 1, is **characterized by the fact in which** the disconnection unit (3) can be built in the transformer station at the beginning of a medium voltage line (1).

9. The operation procedure of the detection and disconnection device for broken covered conductor in a medium voltage electrical network, is **characteristic by the fact in which** the voltage indicator (9) of the indication unit (2) senses voltage drop in one of the covered conductors (4), which is broken in point (C), whereupon this information is sent by the transmitter (13) in the signal optional form in direction (B) to the signal receiver (8) or to the transmitter (13) of the disconnection unit (3), which disconnects the broken covered conductor (4) through the voltage indicator (9) and the switch (7); in which ,about disconnection of the broken covered conductor (4) and its exact location, the transmitter (13) informs the medium voltage power line (1) competent control centre to fix the damage.
